# EUROPÄISCHE PATENTSCHRIFT

(11) **EP 1 474 708 B1**
(45) Veröffentlichungstag und Bekanntmachung des Hinweises auf die Patenterteilung: **14.10.2020**
(21) Anmeldenummer: 02785069.2
(22) Anmeldetag: 15.11.2002
(51) Int. Cl.: G01V 3/15

(54) **ORTUNGSGERÄT UND ZUGEHÖRIGES VERFAHREN**
LOCATING DEVICE AND CORRESPONDING METHOD
APPAREIL DE DETECTION ET PROCEDE CORRESPONDANT

(30) Priorität: 07.02.2002 DE 10205002
(43) Veröffentlichungstag der Anmeldung: 10.11.2004
(73) Patentinhaber: Robert Bosch GmbH, 70442 Stuttgart (DE)
(72) Erfinder: HOFFMANN, Erhard, 70771 Leinfelden-Echterdingen (DE); CLAUSS, Stefan, 70771 Leinfelden-Echterdingen (DE); SKULTETY-BETZ, Uwe, 70771 Leinfelden-Echterdingen (DE); HAASE, Bjoern, 70182 Stuttgart (DE); HOFFMANN, Ulli, 75223 Nieffern-Oeschelbronn (DE)
(86) Internationale Anmeldenummer: PCT/DE2002/004234
(87) Internationale Veröffentlichungsnummer: WO 2003/067284

(56) Entgegenhaltungen:
- DE-A1- 4 103 216
- GB-A- 1 273 858
- GB-A- 2 363 462
- US-A- 4 853 617
- US-A- 5 148 108
- US-A- 5 959 451
- US-A- 6 119 376
- US-B1- 6 211 662
- US-B1- 6 259 241
- JEAN DANIEL NICOUD: "GPR AND METAL DETECTOR PORTABLE SYSTEM" SYMPOSIUM ON TECHNOLOGY AND THE MINE PROBLEM, [Online] 18. - 20. November 1996, XP002238131 MONTREY Gefunden im Internet: <URL:http://diwww.epfl.ch/w3lami/detec/mon terey961.html> [gefunden am 2003-04-11]
- LOCKWOOD G ET AL: "Bomb detection using backscattered X-rays" SENSORS, C3I, INFORMATION, AND TRAINING TECHNOLOGIES FOR LAW ENFORCEMENT, BOSTON, MA, USA, 3-5 NOV. 1998, Bd. 3577, Seiten 53-61, XP002238132 Proceedings of the SPIE - The International Society for Optical Engineering, 1999, SPIE-Int. Soc. Opt. Eng, USA ISSN: 0277-786X
- "Concrete Inspection with radar", , 14 December 2001 (2001-12-14), Retrieved from the Internet: URL:http://web.archive.org/web/20020223063 536/www.geomodel.com/concrete/ [retrieved on 2018-12-11]
- "Utility Location", , 26 December 2001 (2001-12-26), Retrieved from the Internet: URL:http://web.archive.org/web/20020223063 536/www.geomodel.com/utilitylocation/ [retrieved on 2018-12-11]
- GeoModel Inc: "Concrete Testing", , 26 December 2001 (2001-12-26), XP055280324, Retrieved from the Internet: URL:http://web.archive.org/web/20011226200 924/http://www.geomodel.com/concrete/ [retrieved on 2016-06-14]
- Christian Hübscher ET AL: "The youngest channel-levee system of the Bengal Fan: results from digital sediment echosounder data", Marine Geology, 1 January 1997 (1997-01-01), pages 125-145, XP055532849, DOI: 10.1016/S0025-3227(97)00066-2 Retrieved from the Internet: URL:https://ac.els-cdn.com/S00253227970006 62/1-s2.0-S0025322797000662-main.pdf?_tid= bdc59b48-7bad-49e5-8359-1afde031fc07&acdna t=1544535215_a1dfc822ce7a77bb114d47061f399 472 [retrieved on 2018-12-11]

## Beschreibung

### Stand der Technik

Die Erfindung betrifft ein Verfahren zur grafischen Anzeige eines Schnittbilds durch einen Untersuchungsgegenstand mit darin befindlichen Objekten, insbesondere zur Anzeige eines Schnittbilds durch eine Gebäudewand mit darin befindlichen Hindernissen, sowie ein entsprechend ausgestaltetes Ortungsgerät.

Bei der Ortung von Objekten in einer Gebäudewand sind verschiedene Möglichkeiten zur Anzeige des Ortungsergebnisses bekannt.

Die einfachste Möglichkeit sieht lediglich eine Leuchtdiode und/oder einen Summer zur Anzeige des Ortungsergebnisses vor, wobei ein Warnsignal ausgelöst wird, wenn das Meßergebnis eines Ortungssensors einen Schwellenwert überschreitet. Dieses Verfahren zur Anzeige des Ortungsergebnisses ermöglicht jedoch nur eine Aussage über mögliche Hindernisse an der aktuellen Position des Ortungssensors. Darüber hinaus erhält der Benutzer keine quantitative Information über die maximal mögliche Bohrtiefe, sondern lediglich eine qualitative Information, ob sich unter dem Ortungssensor überhaupt ein Objekt befindet.

Es ist weiterhin bekannt, zur Anzeige des Ortungsergebnisses Zeigergeräte, Balkenanzeigen und/oder Summer mit variabler Tonhöhe einzusetzen, wobei die Tiefe eines in der Gebäudewand georteten Objekts den Zeiger- bzw. Balkenausschlag oder die Tonhöhe bestimmt. Der Benutzer erhält hierbei also auch eine quantitative. Information über die Tiefe eines georteten Objekts. Auch hierbei ermöglicht die Anzeige des Ortungsergebnisses jedoch nur eine Aussage über die zulässige Bohrtiefe an der aktuellen Position des Ortungssensors.

Darüber hinaus ist aus dem von der japanischen Firma JRC Radio Corporation vertriebenen Ortungsgerät NJJ-85A eine grafische Anzeige des Ortungsergebnisses auf einem LCD-Bildschirm bekannt. Hierbei sendet das Ortungsgerät ein Signal in die Gebäudewand, das von darin befindlichen Objekten reflektiert wird, wobei aus der Laufzeit des reflektierten Signals von der Aussendung bis zum Empfang durch den Ortungssensor die Tiefe des georteten Objekts berechnet werden kann. Nach dem Ausmessen einer Schnittlinie auf der Gebäudewand wird dann die Amplitude des reflektierten Signals als Funktion der Laufzeit und der Position auf der Schnittlinie grafisch dargestellt. Der Benutzer kann dann Objekte in der Gebäudewand anhand auffälliger Amplitudenmaxima erkennen und aus der Laufzeit die Tiefe der Objekte berechnen. Dieses Anzeigeverfahren erfordert jedoch erhebliche Erfahrung bei der Erkennung der Objekte und der anschließenden Berechnung der Objekttiefe.

Schließlich ist aus dem Ortungsgerät HILTI-Ferroscan ein Verfahren zur grafischen Anzeige des Ortungsergebnisses bekannt. Hierbei wird der interessierende Bereich der Gebäudewand nacheinander in acht linearen Schnittlinien über eine Länge von jeweils 60 cm abgetastet, wobei das Ortungsergebnis der einzelnen linearen Abtastungen zunächst abgespeichert wird. Nach der zweidimensionalen Abtastung wird auf einem LCD-Bildschirm eine quasi transparente Aufsicht auf das Wandinnere dargestellt. Die Tiefe muß für jeden einzelnen Ort separat abgefragt werden. Der Benutzer erhält hierbei jedoch während der Abtastung mit dem Ortungssensor keine Information über etwaige Objekte am aktuellen Ort des Ortungssensors. Vielmehr muß der Benutzer zunächst aufwendig die erforderlichen Ortungsdaten generieren.

Insbesondere sind aus dem Stand - US 6259241 B1, Jean Daniel Nicoud (GPR and metal detector portable system, smposium on technology and the mine problem, 1996), GB 2363462 A, US 5148108 A, US 4853617 A, US 6211662 B1, G. Lockwood et al. (Bomb detection using backscatteres X-rays, Sensors, C3I, Information and training technologies for law enforcement, 1998), US 6119376 A, DE 4103216 A1 und Christian Hübscher (The youngest channel-levee system of the Bengal Fan, Marine Geology, 1997) - Verfahren und/oder Ortungsgeräte zur positionsaufgelösten Ortung bekannt.

### Vorteile der Erfindung

Die Erfindung sieht deshalb ein Verfahren nach Anspruch 1 zur grafischen Anzeige eines Ortungsergebnisses sowie ein entsprechend ausgebildetes Ortungsgerät nach Anspruch 8 vor, bei dem bereits während der Abtastung ein aktuelles Schnittbild durch die Gebäudewand dargestellt wird.

Die Erfindung ist jedoch nicht auf die Ortung von festen Objekten wie beispielsweise Wasserrohren, Betonarmierungen oder Elektroleitungen in einer Gebäudewand beschränkt. Vielmehr ist die Erfindung auch allgemein zur Ortung beliebiger Objekte in einem Untersuchungsgegenstand geeignet. Der Begriff Objekt ist also im Rahmen der Erfindung allgemein zu verstehen und umfaßt beispielsweise auch Hohlräume und Feuchtigkeitsansammlungen usw.

Vorzugsweise wird in das Schnittbild durch den Untersuchungsgegenstand eine Tiefenskala eingeblendet, so daß der Benutzer ohne aufwendige Berechnungen unmittelbar die Tiefe eines georteten Objekts erkennen kann.

Hierbei ist die Maßeinheit der Tiefenskala vorzugsweise einstellbar und wird zur Information des Benutzers ebenfalls in das Schnittbild eingeblendet.

In der bevorzugten Ausführungsform werden die georteten Objekte in Form standardisierter Symbole oder Grafikmuster dargestellt, was vorteilhaft zu einer übersichtlichen Darstellung des Schnittbilds führt.

In einer Variante der Erfindung ist ferner vorgesehen, daß die georteten Objekte in dem Schnittbild in Abhängigkeit von ihrer Tiefe grafisch unterschiedlich dargestellt werden. So können die georteten Objekte in dem Schnittbild in Abhängigkeit von ihrer Tiefe beispielsweise in unterschiedlicher Farbe, Form, Tönung und/oder Größe dargestellt werden. Vorzugsweise werden die oberflächennahen Objekte hierbei rötlich dargestellt, während die oberflächenfernen und weniger gefährdeten Objekte grünlich oder bläulich wiedergegeben werden.

Eine weitere Möglichkeit zur grafischen Differenzierung der georteten Objekte entsprechend der jeweiligen Tiefe besteht darin, daß die georteten Objekte unterhalb einer bestimmten Tiefe blinkend dargestellt werden, um die Aufmerksamkeit des Benutzers auf sich zu ziehen. Hierbei kann die Blinkfrequenz der dargestellten Objekte mit abnehmender Tiefe der Objekte zunehmen, um auf oberflächennahe und damit besonders gefährdete Objekte besonders aufmerksam zu machen.

Ferner sieht die Erfindung in einer Variante zusätzlich einen akustischen Signalgeber vor, der in bestimmten Fällen ein Warnsignal ausgibt. Dies kann beispielsweise dann wünschenswert sein, wenn die Tiefe eines georteten Objekts innerhalb eines vorgegebenen Wertebereichs liegt, auf den der Benutzer besonders aufmerksam gemacht werden soll. In der Regel erfolgt ein derartiges akustisches Warnsignal nur bei einer Ortung oberflächennaher Objekte, die besonders gefährdet sind. Der Wertebereich kann dabei fest im Ortungsgerät abgespeichert und/oder von einem Bediener einstellbar ausgeführt sein.

Vorzugsweise wird in dem Schnittbild auch die Oberfläche des Untersuchungsgegenstands dargestellt, um dem Benutzer eine rasche Orientierung in dem Schnittbild zu erleichtern. Bei der Abtastung einer ebenen Gebäudewand kann hierzu eine einfache Linie eingeblendet werden.

Im Rahmen der Erfindung werden vorzugsweise auch Markierungen in das Schnittbild eingeblendet, welche die aktuelle Position des Ortungssensors und/oder die Gehäusebegrenzungen des Ortungssensors darstellen. Auf diese Weise ist eine einfache Zuordnung der auf dem Schnittbild dargestellten Objektpositionen zu den tatsächlichen Objektpositionen in der Gebäudewand möglich.

Dem gleichen Zweck dient auch die im Rahmen der Erfindung mögliche Einblendung einer grafischen Wiedergabe der aktuellen Position des Ortungssensors.

In der bevorzugten Ausführungsform der Erfindung sind die dargestellten Objekte, die Wiedergabe der Oberfläche des Untersuchungsgegenstands, die Tiefenskala und/oder die Maßeinheit der Tiefenskala in dem Schnittbild ortsfest, während sich der Ortungssensor während der Abtastung bewegt und deshalb auch in dem Schnittbild jeweils in der aktuellen Position dargestellt wird.

Die von dem Ortungssensor gelieferten Ortungsdaten ermöglichen in der Regel nur eine Aussage über einen einzelnen Punkt an der Oberfläche der Gebäudewand. Der Ortungssensor wird deshalb vorzugsweise linear über eine Schnittlinie auf der Oberfläche der Gebäudewand bewegt, um das gewünschte Schnittbild aufzunehmen. Zur Kenntlichmachung des noch nicht abgetasteten Bereichs des Schnittbilds ist in einer Variante der Erfindung vorgesehen, den bereits abgetasteten Bereich des Schnittbilds grafisch anders darzustellen.

Eine Möglichkeit für eine derartige grafische Differenzierung besteht darin, den bereits abgetasteten Bereich des Schnittbilds weiß und den noch nicht abgetasteten Bereich des Schnittbilds grau darzustellen.

Vorzugsweise wird das dargestellte Schnittbild während des Abtastvorgangs laufend oder in vorgegebenen Zeitabständen aktualisiert, damit das dargestellte Schnittbild immer der aktuellen Position des Ortungssensors entspricht.

Ferner besteht im Rahmen der Erfindung auch die Möglichkeit, zusätzliche Informationen über den Betriebszustand des Ortungsgeräts in das Schnittbild einzublenden oder daneben darzustellen.

Es wurde bereits vorstehend erwähnt, daß die Darstellung des Schnittbilds durch den Untersuchungsgegenstand bei dem erfindungsgemäßen Ortungsgerät bereits während des Ortungsvorgangs erfolgt. Hierzu ist der Ortungssensor bei dem erfindungsgemäßen Ortungsgerät über eine Auswertungseinheit mit einer grafischen Anzeigeeinheit verbunden, wobei die Verbindung eine Echt-Zeit-Verbindung ist, die eine aktuelle Darstellung des Ortungsergebnisses ermöglicht. Der Begriff Echt-Zeit-Verbindung ist im Rahmen der Erfindung nicht auf solche Verbindungen beschränkt, bei denen keine zeitliche Verzögerung zwischen der Erfassung der Ortungssignale und deren Darstellung auf der Anzeigeeinheit auftritt, da Signalübertragungsstrecken prinzipiell eine laufzeitbedingte Verzögerung aufweisen. Der Begriff Echt-Zeit-Verbindung umfaßt deshalb im Rahmen der Erfindung auch solche Verbindungen, bei denen die zeitliche Verzögerung zwischen der Erfassung der Ortungssignale durch den Ortungssensor und deren Darstellung durch die Anzeigeeinheit so klein ist, daß das Bild auf der Anzeigeeinheit im wesentlichen ein Schnittbild durch den Untersuchungsgegenstand an der aktuellen Position des Ortungssensors wiedergibt.

Vorzugsweise enthält das von der Anzeigeeinheit des Ortungsgeräts dargestellte Schnittbild eine grafische Wiedergabe der aktuellen Position des Ortungssensors, der aktuellen Position der Mittellinie des Ortungssensors und/oder der aktuellen Position einer Außenlinie des Ortungssensors. Dies erleichtert für den Benutzer vorteilhaft die räumliche Orientierung in dem dargestellten Schnittbild.

Zu dem gleichen Zweck enthält das dargestellte Schnittbild vorzugsweise eine grafische Wiedergabe einer Oberfläche des Untersuchungsgegenstands, einer Tiefenskala, der Maßeinheit der Tiefenskala und/oder der in dem Untersuchungsgegenstand befindlichen Objekte.

Vorzugsweise sind vorgegebene Grafikmuster für die Wiedergabe der Objekte in dem Schnittbild vorgesehen. Die Objekte werden hierbei in dem Schnittbild also nicht entsprechend den tatsächlich gemessenen Signalmustern dargestellt, sondern in idealisierter Form entsprechend den Grafikmustern bzw. Symbolen. Dies verbessert vorteilhaft die Übersichtlichkeit des dargestellten Schnittbilds. Die Grafikmuster können dabei in einem im Ortungsgerät befindlichen oder in einem außerhalb des Ortungsgeräts befindlichen Speicher abgelegt sein, wobei der außerhalb des Ortungsgeräts befindliche Speicher beispielsweise über eine Funkschnittstelle mit dem Ortungsgerät verbunden sein könnte.

Bei der Anzeigeeinheit handelt es sich vorzugsweise um ein LED-Display, ein LCD-Display, eine Kathodenstrahlröhre, ein Plasma-Display, ein VFD-Display oder ein OLED-Display, jedoch ist die Erfindung auch mit anderen Typen von Anzeigeeinheiten realisierbar.

Ferner ist vorzugsweise ein zusätzlicher akustischer und/oder optischer Signalgeber vorgesehen, um ein Hinweissignal zu erzeugen.

Schließlich ist zu erwähnen, daß die Erfindung nicht auf bestimmte Ortungsverfahren beschränkt ist.

### Zeichnungen

Andere vorteilhafte Weiterbildungen der Erfindung sind in den Unteransprüchen gekennzeichnet bzw. werden nachstehend zusammen mit der Beschreibung des bevorzugten Ausführungsbeispiels der Erfindung anhand der Figuren näher erläutert.

Es zeigen:
- Fig. 1: eine Gebäudewand und ein erfindungsgemäßes Ortungsgerät in perspektivischer Darstellung,
- Fig. 2a, 2b: verschiedene Schnittbilder der Gebäudewand, die mit dem erfindungsgemäßen Verfahren erzeugt wurden, sowie
- Fig. 3: ein erfindungsgemäßes Ortungsgerät als vereinfachtes Blockschaltbild.

### Beschreibung der Ausführungsbeispiele

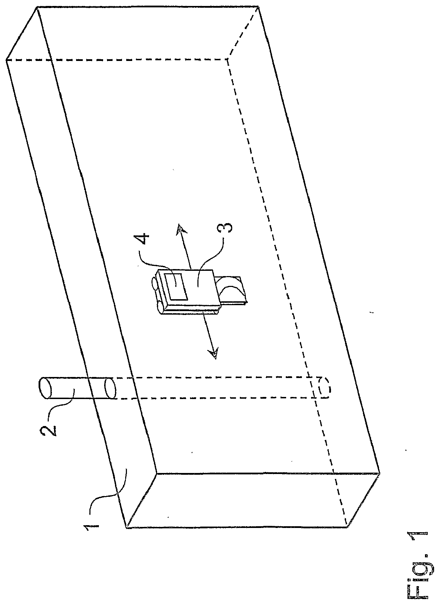

Die Perspektivdarstellung in Figur 1 zeigt eine Gebäudewand 1 mit einer Wasserrohrleitung 2, die von einem erfindungsgemäßen Ortungsgerät 3 geortet werden kann, um eine Beschädigung der Wasserrohrleitung 2 durch eine Bohrung in der Gebäudewand 1 zu verhindern.

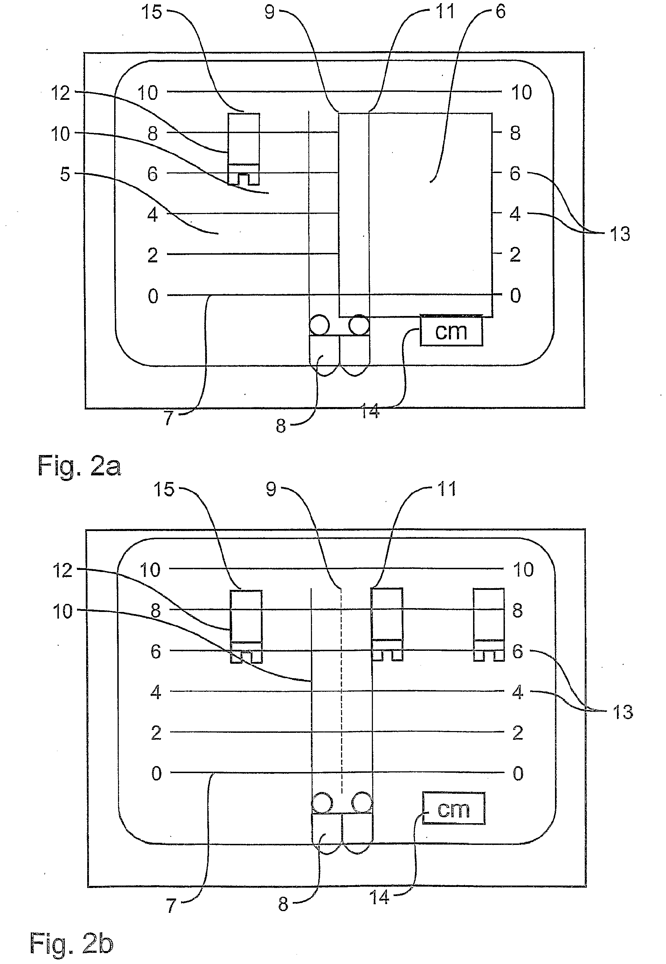

Hierzu wird das Ortungsgerät 3 in linearen Bahnen über die Oberfläche der Gebäudewand 1 geführt, wobei jeweils ein Schnittbild der Gebäudewand 1 erzeugt wird, wie es in den Figuren 2a und 2b dargestellt ist.

Das von dem Ortungsgerät 3 verwendete Ortungsverfahren beruht auf der Laufzeitmessung eines von dem Ortungsgerät 3 in die Gebäudewand 1 eindringendes und an der Wasserrohrleitung 2 reflektierten Signals. Derartige Ortungsverfahren sind allgemein bekannt, so daß im folgenden auf eine detaillierte Beschreibung des Ortungsverfahrens verzichtet werden kann.

Zur Anzeige des Ortungsergebnisses verfügt das Ortungsgerät 3 über einen integrierten LCD-Bildschirm 4, auf dem die in den Figuren 2a und 2b dargestellten Schnittbilder angezeigt werden.

Die Anzeige der Schnittbilder erfolgt bereits während der Abtastung der einzelnen Schnittlinien und wird laufend aktualisiert, so daß das auf dem LCD-Bildschirm 4 dargestellte Schnittbild jederzeit der aktuellen Position des Ortungsgeräts 3 entspricht. Dies erleichtert dem Benutzer die Zuordnung der Position von Objekten innerhalb des Schnittbilds zu der tatsächlichen Position des georteten Objekts in der Gebäudewand 1.

Im folgenden wird nun anhand der Figuren 2a und 2b erläutert, wie die Darstellung der Schnittbilder auf dem LCD-Bildschirm 4 des Ortungsgeräts 3 erfolgt.

So zeigt Figur 2a ein Schnittbild durch die Gebäudewand 1 während der Abtastung einer Schnittlinie auf der Gebäudewand 1, wenn ein Bereich 5 der Schnittlinie bereits abgetastet wurde, während die Abtastung eines weiteren Bereichs 6 auf der Schnittlinie noch bevorsteht. Die beiden Bereiche 5, 6 des Schnittbilds werden deshalb grafisch unterschiedlich dargestellt, um den Benutzer über den Fortschritt des Abtastvorgangs und die aktuelle Position des Ortungsgeräts 3 auf der Schnittlinie zu informieren. So ist der bereits abgetastete Bereich 5 weiß dargestellt, während der noch nicht abgetastete Bereich 6 grau wiedergegeben wird.

Weiterhin ist in das Schnittbild an der Unterseite die Oberfläche der Gebäudewand 1 in Form einer Basislinie 7 eingeblendet, was dem Benutzer die Orientierung innerhalb des Schnittbilds erleichtert.

Dies wird durch die Einblendung eines Grafiksymbols 8 für das Ortungsgerät 3 unterstützt, wobei das Grafiksymbol 8 stets in der Mitte eingeblendet wird. In dem in Figur 2a dargestellten Beispiel eines Schnittbilds wird ein Grafiksymbol 12 eines erfaßten Objekts im LCD-Bildschirm 4 an der Stelle dargestellt, die seiner relativen Lage zum Ortungsgerät 3 in der Gebäudewand 1 entspricht. Beispielsweise zeigt Fig. 2a ein links vom Ortungsgerät 3 befindliches Objekt. Wird das Ortungsgerät 3 nach links bewegt, bewegt sich das Grafiksymbol 12 im LCD-Bildschirm 4 in Richtung des Grafiksymbols 8 des Ortungsgeräts 3. Ist das Grafiksymbol 12 des Objekts direkt über dem Grafiksymbol 8 des Ortungsgeräts 3, befindet sich das Ortungsgerät 3 direkt über dem Objekt und die Position des Objekts kann eindeutig über eine nicht näher dargestellte Markierungskerbe am Ortungsgerät 3 bestimmt werden.

Ferner wird in das Schnittbild eine Mittellinie 9 eingeblendet, die der Mitte des Ortungsgeräts 3 entspricht, um eine exakte Lokalisierung eines Objekts in der Gebäudewand 1 zu ermöglichen.

Dem gleichen Zweck dient die Einblendung von Außenlinien 10, 11, welche die seitlichen Gehäusebegrenzungen des Ortungsgeräts 3 wiedergeben.

Die von dem Ortungsgerät 3 erfaßten Objekte, wie beispielsweise die Wasserrohrleitung 2, werden in Form standardisierter Grafiksymbole 12 in das Schnittbild eingeblendet, wobei die Grafiksymbole 12 entsprechend ihrer tatsächlichen Lage in der Gebäudewand 1 korrekt in dem Schnittbild angeordnet sind.

Zur Erleichterung der räumlichen Zuordnung ist zusätzlich eine Tiefenskala 13 seitlich in das Schnittbild eingeblendet, so daß der Benutzer unmittelbar und ohne aufwendige Berechnungen die Tiefe der georteten Objekte oder eine davon abgeleitete Bohrtiefe anhand der Grafiksymbole 12 ablesen kann.

Das erfindungsgemäße Ortungsgerät 3 eignet sich für eine Objektortung in verschiedenen Tiefenbereichen, so daß eine zusätzliche Anzeige 14 in das Schnittbild eingeblendet wird, welche die Maßeinheit der Tiefenskala 13 angibt.

Werden bei dem verwendeten Ortungsprinzip die Wandbereiche hinter den georteten Objekten von diesen abgeschattet, so daß dort möglicherweise befindliche weitere Objekte unter Umständen nicht geortet werden können, werden diese abgeschatteten Bereiche in dem Schnittbild wie der noch nicht abgetastete Bereich 6 als graue Fläche 15 dargestellt.

Figur 2b zeigt schließlich ein fertiggestelltes Schnittbild, nachdem das Ortungsgerät 3 eine komplette Schnittlinie abgefahren hat. Dementsprechend ist das gesamte Schnittbild weiß dargestellt, um anzuzeigen, daß die Abtastung des dargestellten Schnittbilds vollständig ist.

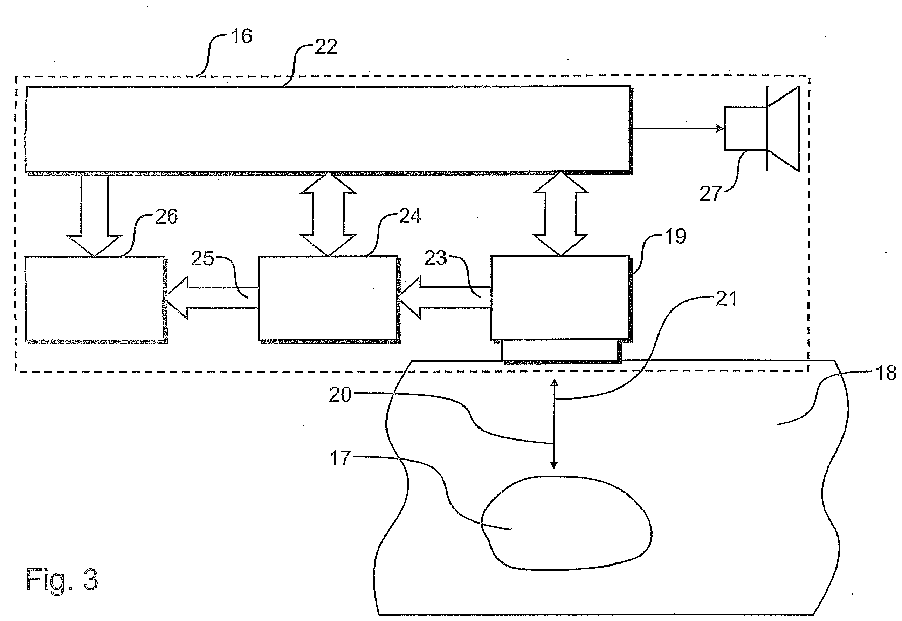

Schließlich zeigt Figur 3 ein vereinfachtes Blockschaltbild eines erfindungsgemäßen Ortungsgeräts 16, das weitgehend herkömmlich aufgebaut ist und deshalb im folgenden nur kurz beschrieben wird.

So ermöglicht das Ortungsgerät 16 die Ortung eines Objekts 17 in einem Untersuchungsgegenstand 18, wobei es sich bei dem Untersuchungsgegenstand 18 beispielsweise um eine Gebäudewand und bei dem Objekt 17 beispielsweise um eine Rohrleitung in der Gebäudewand handeln kann.

Hierzu weist das Ortungsgerät 16 einen Ortungssensor 19 auf, der mit einem Wandlerkopf auf die Oberfläche des Untersuchungsgegenstands 18 aufgesetzt wird und ein Meßsignal 20 in den Untersuchungsgegenstand 18 einbringt. Das eingebrachte Meßsignal 20 wird in dem Untersuchungsgegenstand 18 an der Grenzfläche zu dem zu ortenden Objekt 17 relativ stark reflektiert und anschließend von dem Wandlerkopf des Ortungssensors 19 als Antwortsignal 21 detektiert.

Die Steuerung des Ortungssensors 19 und der anderen Komponenten des Ortungsgeräts 16 erfolgt durch eine zentrale Steuereinheit 22, die beispielsweise das Einbringen des Meßsignals 20 und die Laufzeitmessung steuert.

Die von dem Ortungssensor 19 erfaßten Ortungsdaten werden während der Messung laufend über eine Echt-Zeit-Verbindung 23 an eine Auswertungseinheit 24 weitergegeben, die aus den Ortungsdaten und den gemessenen Laufzeiten ein Schnittbild durch den Untersuchungsgegenstand 18 berechnet.

Dieses Schnittbild wird von der Auswertungseinheit 24 während der Messung laufend über eine weitere Echt-Zeit-Verbindung 25 an ein LCD-Display 26 weitergegeben, wobei das LCD-Display 26 das Schnittbild in der vorstehend beschriebenen und in den Figuren 2a und 2b wiedergegebenen Weise darstellt.

Das erfindungsgemäße Ortungsgerät 16 ermöglicht durch die Echt-Zeit-Verbindungen 23, 25 zwischen dem Ortungssensor 19, der Auswertungseinheit 24 und dem LCD-Display 26 bereits während der Abtastung eine positionsaktuelle Anzeige des aktuellen Schnittbilds durch den Untersuchungsgegenstand 18.

Schließlich weist das Ortungsgerät 16 noch einen Lautsprecher 27 auf, der von der Steuereinheit 22 zur Abgabe eines Warnsignals angesteuert werden kann. Ein derartiges Warnsignal kann beispielsweise ausgegeben werden, wenn die Ortung ergibt, daß sich das Objekt 17 in dem Untersuchungsgegenstand 18 sehr oberflächennah befindet, wobei die Tiefe einen vorgegebenen Minimalwert unterschreitet.

Die Erfindung beschränkt sich in ihrer Ausführung nicht auf die vorstehend angegebenen Ausführungsbeispiele, sondern wird durch die folgenden Ansprüche beschränkt.

**Bezugszeichen**

| | | | |
|---|---|---|---|
| 1 | Gebäudewand | 15 | verdeckte Fläche |
| 2 | Wasserrohrleitung | 16 | Ortungsgerät |
| 3 | Ortungsgerät | 17 | Objekt |
| 4 | LCD-Bildschirm | 18 | Untersuchungsgegenstand |
| 5 | Abgetasteter Bereich | 19 | Ortungssensor |
| 6 | nicht abgetasteter Bereich | 20 | Meßsignal |
| 7 | Basislinie | 21 | Antwortsignal |
| 8 | Grafiksymbol für Ortungsgerät | 22 | Steuereinheit |
| 9 | Mittellinie des Ortungsgeräts | 23 | Echt-Zeit-Verbindung |
| 10 | Außenlinie des Ortungsgeräts | 24 | Auswertungseinheit |
| 11 | Außenlinie des Ortungsgeräts | 25 | Echt-Zeit-Verbindung |
| 12 | Grafiksymbol für Objekt | 26 | LCD-Display |
| 13 | Tiefenskala | 27 | Lautsprecher |
| 14 | Anzeige für Maßeinheit der Tiefenskala | | |

## Patentansprüche

1. Verfahren zur grafischen Anzeige eines Schnittbilds eines Untersuchungsgegenstands (1, 18) mit darin befindlichen Objekten (2, 17), insbesondere zur Anzeige eines Schnittbilds einer Gebäudewand, wobei ein Ortungssensor während einer Abtastung über eine Schnittlinie auf einer Oberfläche des Untersuchungsgegenstands (1, 18) bewegt wird, um das Schnittbild aufzunehmen, wobei das Schnittbild aus Ortungsdaten sowie einer Position des Ortungssensors (3, 19) gewonnen wird, wobei das Schnittbild mit den in dem Untersuchungsgegenstand (1, 18) befindlichen Objekten (2, 17) während der Datenerfassung durch den Ortungssensor (3, 19) dargestellt wird, **dadurch gekennzeichnet, daß** in dem Schnittbild die aufgrund einer Verdeckung durch die zu ortenden Objekte (2, 17) nicht erfaßbaren Bereiche (15) des Untersuchungsgegenstands (1, 18) und die bereits von dem Ortungssensor (3, 19) erfaßten Bereiche (5) des Untersuchungsgegenstands (1, 18) grafisch unterschiedlich dargestellt werden.

2. Verfahren nach Anspruch 1, **dadurch gekennzeichnet, daß** in dem Schnittbild eine Tiefenskala (13) dargestellt wird.

3. Verfahren nach Anspruch 2, **dadurch gekennzeichnet, daß** in dem Schnittbild eine Anzeige (14) enthalten ist, welche die Maßeinheit der Tiefenskala (13) angibt.

4. Verfahren nach mindestens einem der vorhergehenden Ansprüche, **dadurch gekennzeichnet, daß** die zu ortenden Objekte (2, 17) jeweils in Form standardisierter Symbole (12) dargestellt werden.

5. Verfahren nach mindestens einem der vorhergehenden Ansprüche, **dadurch gekennzeichnet, daß** die zu ortenden Objekte (2, 17) in dem Schnittbild in Abhängigkeit von ihrer Tiefe grafisch unterschiedlich dargestellt werden.

6. Verfahren nach mindestens einem der vorhergehenden Ansprüche, **dadurch gekennzeichnet, daß** ein Signal ausgegeben wird, wenn die Tiefe eines von dem Ortungssensor (3, 19) erfaßten Objekts in dem Untersuchungsgegenstand (1, 18) innerhalb eines vorgegebenen Wertebereichs liegt.

7. Verfahren nach mindestens einem der vorhergehenden Ansprüche, **dadurch gekennzeichnet, daß** in dem Schnittbild die bereits von dem Ortungssensor (3, 19) erfaßten Bereiche (5) des Untersuchungsgegenstands (1, 18) und die noch nicht von dem Ortungssensor (3, 19) erfaßten Bereiche (6) des Untersuchungsgegenstands grafisch unterschiedlich dargestellt werden.

8. Ortungsgerät (16) zur Ortung von Objekten in einem Untersuchungsgegenstand (1, 18), insbesondere in einer Gebäudewand, mit einem Ortungssensor (3, 19), einer mit dem Ortungssensor (3, 19) verbundenen Auswertungseinheit (24) zur Auswertung von durch den Ortungssensor (3, 19) erfaßten Ortungsdaten und einer grafischen Anzeigeeinheit (4, 26) zur Wiedergabe eines Schnittbilds durch den Untersuchungsgegenstand (1, 18) mit den darin befindlichen Objekten (2, 17) basierend auf den Ortungsdaten sowie einer Position des Ortungssensors (3, 19), wobei der Ortungssensor (3, 19), die Auswertungseinheit (24) und die Anzeigeeinheit (4, 26) durch eine Echt-Zeit-Verbindung (23, 25) miteinander verbunden sind, um eine aktuelle Ausgabe des Schnittbilds entsprechend der jeweiligen Position des Ortungssensors (3, 19) zu ermöglichen, **dadurch gekennzeichnet, dass** in dem Schnittbild aufgrund einer Verdeckung durch die zu ortenden Objekte (2, 17) nicht erfaßbare Bereiche (15) des Untersuchungsgegenstands (1, 18) und bereits von dem Ortungssensor (3, 19) erfaßte Bereiche (5) des Untersuchungsgegenstands (1, 18) grafisch unterschiedlich darstellbar sind.

9. Ortungsgerät (16) nach Anspruch 8, **dadurch gekennzeichnet, daß** das von der Anzeigeeinheit (4) dargestellte Schnittbild eine grafische Wiedergabe (8-11) der aktuellen Position des Ortungssensors (3, 19), der aktuellen Position der Mittellinie (9) des Ortungssensors (3, 19) und/oder der aktuellen Position einer Außenlinie (10, 11) des Ortungssensors (3, 19) enthält.

10. Ortungsgerät (16) nach Anspruch 8 oder 9, **dadurch gekennzeichnet, daß** das von der Anzeigeeinheit (4, 26) dargestellte Schnittbild eine grafische Wiedergabe (7, 12-14) einer Oberfläche des Untersuchungsgegenstands (1, 18), einer Tiefenskala (13), der Maßeinheit (14) der Tiefenskala (13) und/oder der in dem Untersuchungsgegenstand (1, 18) befindlichen Objekte (2, 17) enthält.

11. Ortungsgerät (16) nach mindestens einem der vorhergehenden Ansprüche 8 bis 10, **dadurch gekennzeichnet, daß** vorgegebene Grafikmuster (12) für die Wiedergabe der Objekte (2, 17) in dem Schnittbild vorgesehen sind.

12. Ortungsgerät (16) nach mindestens einem der vorhergehenden Ansprüche 8 bis 11, **dadurch gekennzeichnet, daß** die Anzeigeeinheit (4, 26) ein LED-Display, ein LCD-Display, eine Kathodenstrahlröhre, ein Plasma-Display, ein VFD-Display oder ein OLED-Display aufweist.

13. Ortungsgerät (16) nach mindestens einem der vorhergehenden Ansprüche 8 bis 12, **gekennzeichnet durch** einen zusätzlichen akustischen Signalgeber (27) zur Erzeugung eines Hinweissignals.

## Claims

1. Method for graphically displaying a sectional image of an article under examination (1, 18) with objects (2, 17) located therein, in particular for displaying a sectional image of a building wall, wherein a locating sensor is moved over a section line on a surface of the article under examination (1, 18) during a scan to record the sectional image, wherein the sectional image is obtained from location data and a position of the locating sensor (3, 19), wherein the sectional image with the objects (2, 17) located in the article under examination (1, 18) is represented during the data capture by way of the locating sensor (3, 19), **characterized in that** regions (15) of the article under examination (1, 18) that are not capturable owing to an obscuration by the objects (2, 17) to be located and regions (5) of the article under examination (1, 18) that have already been captured by the locating sensor (3, 19) are represented in the sectional image in graphically different ways.

2. Method according to Claim 1, **characterized in that** a depth scale (13) is represented in the sectional image.

3. Method according to Claim 2, **characterized in that** a display (14) indicating the measurement unit of the depth scale (13) is contained in the sectional image.

4. Method according to at least one of the preceding claims, **characterized in that** the objects (2, 17) to be located are represented in each case in the form of standardized symbols (12).

5. Method according to at least one of the preceding claims, **characterized in that** the objects (2, 17) to be located are represented in the sectional image in graphically different ways depending on their depths.

6. Method according to at least one of the preceding claims, **characterized in that** a signal is output if the depth of an object in the article under examination (1, 18) captured by the locating sensor (3, 19) is located within a specified value range.

7. Method according to at least one of the preceding claims, **characterized in that** the regions (5) of the article under examination (1, 18) that have already been captured by the locating sensor (3, 19) and the regions (6) of the article under examination that have not yet been captured by the locating sensor (3, 19) are represented in the sectional image in graphically different ways.

8. Locating device (16) for locating objects in an article under examination (1, 18), in particular in a building wall, having a locating sensor (3, 19), an evaluation unit (24) connected to the locating sensor (3, 19) for evaluating location data captured by the locating sensor (3, 19) and a graphical display unit (4, 26) for reproducing a sectional image through the article under examination (1, 18) with the objects (2, 17) located therein based on the location data and on a position of the locating sensor (3, 19), wherein the locating sensor (3, 19), the evaluation unit (24) and the display unit (4, 26) are connected to one another by way of a real-time connection (23, 25) to enable a current output of the sectional image according to the respective position of the locating sensor (3, 19), **characterized in that** regions (15) of the article under examination (1, 18) that are not capturable owing to an obscuration by the objects (2, 17) to be located and regions (5) of the article under examination (1, 18) that have already been captured by the locating sensor (3, 19) are represented in the sectional image in graphically different ways.

9. Locating device (16) according to Claim 8, **characterized in that** the sectional image represented by the display unit (4) contains a graphical reproduction (8-11) of the current position of the locating sensor (3, 19), of the current position of the central line (9) of the locating sensor (3, 19) and/or of the current position of an outer line (10, 11) of the locating sensor (3, 19).

10. Locating device (16) according to Claim 8 or 9, **characterized in that** the sectional image represented by the display unit (4, 26) contains a graphical reproduction (7, 12-14) of a surface of the article under examination (1, 18), of a depth scale (13), of the measurement unit (14) of the depth scale (13) and/or of the objects (2, 17) contained in the article under examination (1, 18).

11. Locating device (16) according to at least one of the preceding Claims 8 to 10, **characterized in that** specified graphics patterns (12) for the reproduction of the objects (2, 17) in the sectional image are provided.

12. Locating device (16) according to at least one of the preceding Claims 8 to 11, **characterized in that** the display unit (4, 26) includes an LED display, an LCD display, a cathode-ray tube, a plasma display, a VFD display or an OLED display.

13. Locating device (16) according to at least one of the preceding Claims 8 to 12, **characterized by** an additional acoustic signal transmitter (27) for generating an alert signal.

## Revendications

1. Procédé permettant un affichage graphique d'une vue en coupe d'un élément à analyser (1, 18) avec des objets (2, 17) qui se trouvent à l'intérieur, en particulier un affichage d'une vue en coupe d'un mur de bâtiment, dans lequel un capteur de localisation pendant un balayage est déplacé le long d'une ligne d'intersection sur une surface de l'élément à analyser (1, 18) afin d'enregistrer la vue en coupe, la vue en coupe étant obtenue à partir de données de localisation ainsi que d'une position du capteur de localisation (3, 19), la vue en coupe avec les objets (2, 17) qui se trouvent dans l'élément à analyser (1, 18) étant représentée pendant la détection de données par le capteur de localisation (3, 19), **caractérisé en ce que** sur la vue en coupe, les zones (15) de l'élément à analyser (1, 18), non décelables en raison d'un recouvrement par les objets à localiser (2, 17), et les zones (5) de l'élément à analyser (1, 18), déjà détectées par le capteur de localisation (3, 19), sont représentées graphiquement de manière différente.

2. Procédé selon la revendication 1, **caractérisé en ce qu'**une échelle de profondeur (13) est représentée sur la vue en coupe.

3. Procédé selon la revendication 2, **caractérisé en ce que** la vue en coupe comprend un affichage (14) qui indique l'unité de mesure de l'échelle de profondeur (13) .

4. Procédé selon au moins l'une des revendications précédentes, **caractérisé en ce que** les objets à localiser (2, 17) sont représentés respectivement sous la forme de symboles standardisés (12).

5. Procédé selon au moins l'une des revendications précédentes, **caractérisé en ce que** les objets à localiser (2, 17) sont représentés sur la vue en coupe graphiquement de manière différente en fonction de leur profondeur.

6. Procédé selon au moins l'une des revendications précédentes, **caractérisé en ce qu'**un signal est émis si la profondeur d'un objet détecté par le capteur de localisation (3, 19) dans l'élément à analyser (1, 18) est comprise dans une plage de valeurs prédéfinie.

7. Procédé selon au moins l'une des revendications précédentes, **caractérisé en ce que** sur la vue en coupe, les zones (5) de l'élément à analyser (1, 18), déjà détectées par le capteur de localisation (3, 19), et les zones (6) de l'élément à analyser, pas encore détectées par le capteur de localisation (3, 19) sont représentées graphiquement de manière différente.

8. Appareil de localisation (16) permettant de localiser des objets dans un élément à analyser (1, 18), en particulier dans un mur de bâtiment, comprenant un capteur de localisation (3, 19), une unité d'évaluation (24) reliée au capteur de localisation (3, 19) pour évaluer des données de localisation détectées par le capteur de localisation (3, 19), et une unité d'affichage graphique (4, 26) pour reproduire une vue en coupe de l'élément à analyser (1, 18) avec les objets (2, 17) se trouvant à l'intérieur sur la base des données de localisation ainsi que d'une position du capteur de localisation (3, 19), dans lequel le capteur de localisation (3, 19), l'unité d'évaluation (24) et l'unité d'affichage (4, 26) sont reliés les uns aux autres par une liaison en temps réel (23, 25) pour permettre une sortie actuelle de la vue en coupe en fonction de la position respective du capteur de localisation (3, 19), **caractérisé en ce que** sur la vue en coupe, les zones (15) de l'élément à analyser (1, 18), non décelables en raison d'un recouvrement par les objets à localiser (2, 17), et les zones (5) de l'élément à analyser (1, 18), déjà détectées par le capteur de localisation (3, 19), peuvent être représentées graphiquement de manière différente.

9. Appareil de localisation (16) selon la revendication 8, **caractérisé en ce que** la vue en coupe représentée par l'unité d'affichage (4) comprend une reproduction graphique (8-11) de la position actuelle du capteur de localisation (3, 19), de la position actuelle de la ligne médiane (9) du capteur de localisation (3, 19), et/ou de la position actuelle d'une ligne extérieure (10, 11) du capteur de localisation (3, 19).

10. Appareil de localisation (16) selon la revendication 8 ou 9, **caractérisé en ce que** la vue en coupe représentée par l'unité d'affichage (4, 26) comprend une reproduction graphique (7, 12-14) d'une surface de l'élément à analyser (1, 18), d'une échelle de profondeur (13), de l'unité de mesure (14) de l'échelle de profondeur (13) et/ou des objets (2, 17) se trouvant dans l'élément à analyser (1, 18).

11. Appareil de localisation (16) selon au moins l'une des revendications précédentes 8 à 10, **caractérisé en ce que** des motifs graphiques prédéfinis (12) sont prévus pour la reproduction des objets (2, 17) sur la vue en coupe.

12. Appareil de localisation (16) selon au moins l'une des revendications précédentes 8 à 11, **caractérisé en ce que** l'unité d'affichage (4, 26) présente un affichage LED, un affichage LCD, un tube cathodique, un affichage plasma, un affichage VFD ou un affichage OLED.

13. Appareil de localisation (16) selon au moins l'une des revendications précédentes 8 à 12, **caractérisé par** un générateur de signaux acoustiques supplémentaire (27) pour générer un signal indicateur.
